# EUROPEAN PATENT APPLICATION

(11) **EP 4 825 928 A1**
(43) Date of publication of application: **21.10.2026**
(21) Application number: 26172431.4
(22) Date of filing: 15.04.2026
(51) Int. Cl.: C09D 11/101, C09D 11/38, C09D 11/322

(54) **ACTINIC RADIATION-CURABLE INKJET INK AND IMAGE FORMING METHOD**

(30) Priority: 16.04.2025 JP 2025067478
(71) Applicant: Konica Minolta, Inc., Tokyo 100-7015 (JP)
(72) Inventor: IIZUKA, Momoko, Tokyo, 100-7015 (JP); HOSAKA, Kenichiro, Tokyo, 100-7015 (JP)
(74) Representative: MFG Patentanwälte Meyer-Wildhagen Meggle-Freund Gerhard PartG mbB

(57) **Abstract**

The actinic radiation-curable inkjet ink includes (A) a polymerization initiator, and (B) a polymerizable compound. The (A) polymerization initiator includes (A-1) a polymerization initiator represented by the following General formula (1), and the (B) polymerizable compound includes (B-1) a polymerizable compound having two or more polymerizable functional groups. 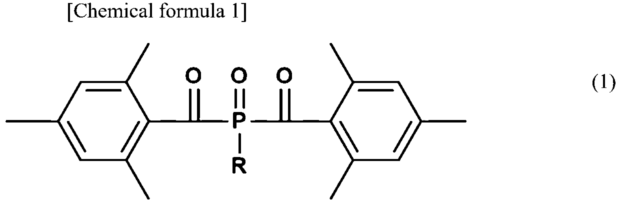 (In General formula (1), R represents an aliphatic hydrocarbon group)

## Description

### BACKGROUND OF THE INVENTION

### 1. Field of the Invention

The present invention relates to an actinic radiation-curable inkjet ink and an image forming method.

### 2. Description of Related Art

Actinic radiation-curable inkjet inks are known in which ink is applied to a base material and then cured by irradiation with actinic radiation such as ultraviolet rays or electron beams to form an image or the like. An actinic radiation-curable inkjet ink usually contains a polymerizable compound that is polymerized by irradiation with actinic radiation, and a polymerization initiator for initiating the polymerization of the polymerizable compound.

For example, Japanese Unexamined Patent Publication No. 2013-209518 describes an actinic radiation-curable inkjet ink composition containing a polyfunctional (meth)acrylate compound and a specific polymerization initiator. According to the inkjet ink composition described in PTL 1, it is possible to provide an actinic radiation-curable inkjet ink composition that can suppress the elution of the components in the film to the outside, the shrinkage of the support, and the odor of the printed material, and is excellent in curability and blocking resistance.

However, according to the findings of the present inventors, when the actinic radiation-curable inkjet ink composition described in PTL 1 is used, there is room for improvement in surface curability and abrasion resistance.

### SUMMARY OF THE INVENTION

An object of the present invention is to provide an actinic radiation-curable inkjet ink capable of forming an image having both high surface curability and high abrasion resistance, and an image forming method using the inkjet ink.

In order to achieve at least one of the above-described objects, an actinic radiation-curable inkjet ink according to one aspect of the present invention, is an actinic radiation-curable inkjet ink comprising: (A) a polymerization initiator, and (B) a polymerizable compound, wherein
the (A) polymerization initiator includes (A-1) a polymerization initiator represented by General formula (1) below: 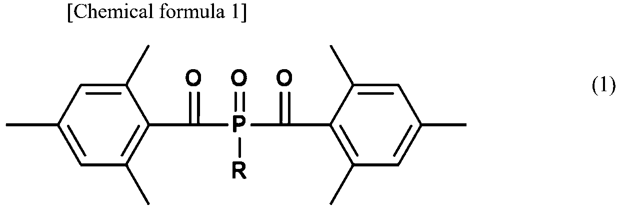
in General formula (1), R represents an aliphatic hydrocarbon group, and
the (B) polymerizable compound includes (B-1) a polymerizable compound having two or more polymerizable functional groups.

### DESCRIPTION OF THE PREFERRED EMBODIMENTS

The advantageous and features provided by one or more embodiments of the invention will become more fully understood from the detailed description given hereinbelow. Hereinafter, one or more embodiments of the present invention will be described with reference to the drawings. However, the scope of the invention is not limited to the disclosed embodiments.

Note that in the present specification, a numerical range indicated by using "to" means a range including numerical values described before and after "to" as a lower limit value and an upper limit value.

In addition, in the present specification, "(meth)acryl" means acryl or methacryl, "(meth)acrylate" means acrylate or methacrylate, and "(meth)acryloyl" means acryloyl or methacryloyl.

1. Actinic radiation-curable inkjet ink

The actinic radiation-curable inkjet ink according to the present embodiment is as follows:
An actinic radiation-curable inkjet ink (hereinafter, also simply referred to as "inkjet ink") containing: (A) a polymerization initiator, and (B) a polymerizable compound.

The (A) polymerization initiator includes (A-1) a polymerization initiator represented by the following General formula (1), and
the (B) polymerizable compound includes (B-1) a polymerizable compound having two or more polymerizable functional groups.

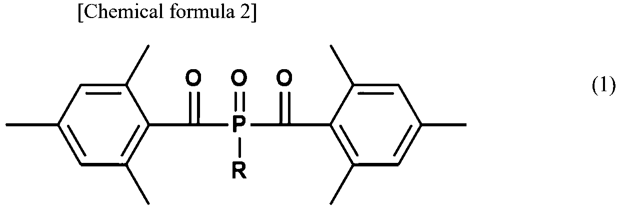

In the General formula (1), R represents an aliphatic hydrocarbon group.

Examples of actinic radiation that can be used for curing inkjet ink include electron beams, ultraviolet rays, α-rays, γ-rays, and X-rays. Among these, ultraviolet rays and electron beams are preferable, and ultraviolet rays are more preferable.

Components that the inkjet ink may contain, physical properties of the inkjet ink, and the like are described below.

### (A) Polymerization Initiator

The (A) polymerization initiator is a compound that initiates polymerization and crosslinking of the (B) polymerizable compound upon irradiation with actinic radiation. The (A) polymerization initiator is preferably a photopolymerization initiator.

### 1-1-1. (A-1) Polymerization initiator represented by General formula (1)

In the present embodiment, the (A) polymerization initiator includes (A-1) a polymerization initiator represented by the General formula (1) (hereinafter, also simply referred to as "initiator (A-1)").

By using the initiator (A-1), surface curability and abrasion resistance are enhanced. The reason is not clear, but is considered as follows.

The initiator (A-1) has a bisacylphosphine structure. In general, in an initiator having an acylphosphine structure, cleavage occurs at a bond between an acyl group and a phosphorus atom by irradiation with actinic radiation, thereby generating a radical. In particular, the bisacylphosphine structure has two bonds each between an acyl group and a phosphorus atom and has at least two reaction initiation sites.

In the case where one of the bonds between the two acyl groups and the phosphorus atom is cleaved upon irradiation with actinic radiation in the initiator (A-1), the remaining moiety having a reaction initiation site has a structure having an aliphatic hydrocarbon group as R. Therefore, the moiety having the remaining reaction initiation site is not bulky as compared with an aromatic hydrocarbon group, and the compatibility with the polymerizable compound (B) described later is enhanced, and therefore, the mobility in the film is easily enhanced. As a result, it is considered that the crosslinking reaction smoothly proceeds, the curability is easily enhanced, and the surface curability and the abrasion resistance are enhanced.

In addition, in the case of a compound in which R is an aromatic hydrocarbon group, a structure having low planarity is more likely to be obtained due to the bulkiness of the structure of R. On the other hand, it is considered that the planarity of the compound is more likely to be increased by introducing an aliphatic hydrocarbon group into R, compared to the case where an aromatic hydrocarbon group is introduced into R. In this case, since the conjugation length is increased, the absorbance is increased and the actinic radiation is easily absorbed. As a result, the crosslinking reaction proceeds smoothly, the curability is more likely to increase, and in particular, the composition is more likely to be cured with lower energy. In addition, since an increase in the planarity of the compound also causes a shift of absorption to longer wavelengths, the curability is more likely to be significantly increased, in particular, when curing is performed with light included in the range of 350 nm to 450 nm.

The number of carbon atoms of R is preferably 2 to 12, and more preferably 8. When the number of carbon atoms is 2 or more, the compatibility with the polymerizable compound (B) described later is easily enhanced, and thus the mobility in the film is enhanced, and the curability is easily enhanced. When the number of carbon atoms is 12 or less, R is less likely to be bulky, the mobility in the film is enhanced, and the planarity of the compound is also likely to be enhanced, so that the curability is more likely to be enhanced. As a result, the surface curability and the abrasion resistance of the image are more likely to be enhanced.

R is also preferably a linear aliphatic hydrocarbon group. In the case of a structure having no branched chain, R is less likely to be bulky, the mobility in the film is easily enhanced, and the planarity of the compound is also easily enhanced, and therefore, the curability is enhanced, and the surface curability and the abrasion resistance of the image are easily enhanced.

From the above viewpoints, R is preferably a linear aliphatic hydrocarbon group having 2 to 12 carbon atoms, and preferably a linear aliphatic hydrocarbon group having 8 carbon atoms.

R is not particularly limited as long as it is an aliphatic hydrocarbon group. Examples of R include ethyl group, normal propyl group, iso-propyl group, normal butyl group, t-butyl group, normal pentyl group, normal hexyl group, normal heptyl group, normal octyl group, normal nonyl group, normal decyl group, and the like. Among these, ethyl group, normal pentyl group, normal octyl group, and normal decyl group, which have the above-described preferable number of carbon atoms and are linear aliphatic hydrocarbons, are preferable, and normal octyl group is more preferable.

### 1-1-2. (A-2) Polymerization initiator not included in initiator (A-1)

The (A-2) polymerization initiator that is not included in the initiator (A-1) (hereinafter, also simply referred to as "initiator (A-2)") is not particularly limited, and a known radical polymerization initiator or cationic polymerization initiator can be used.

Examples of the radical polymerization initiator included in the initiator (A-2) include the following:
initiators having an acylphosphine structure that is not included in the initiator (A-1), initiators having an alkylphenone structure, initiators having an acetophenone structure, initiators having a thioxanthone structure, initiators having a benzophenone structure, and initiators having a benzoin structure,
and the like.

Examples of the radical polymerization initiator having an acylphosphine structure that is not included in the initiator (A-1) include radical polymerization initiators having a monoacylphosphine structure and radical polymerization initiators having a bisacylphosphine structure that is not included in the initiator (A-1).

Examples of the radical polymerization initiator having a monoacylphosphine structure include 2,4,6-trimethylbenzoylethoxyphenylphosphine oxide, 2,6-dimethylbenzoylethoxyphenylphosphine oxide, 2,4,6-trimethylbenzoylmethoxyphenylphosphine oxide, 2,6-dimethylbenzoylmethoxyphenylphosphine oxide, 2,4,6-trimethylbenzoyl (4-pentyloxyphenyl) phenylphosphine oxide, 2,6-dimethylbenzoyl (4-pentyloxyphenyl) phenylphosphine oxide and the like.

Examples of commercially available products of the radical polymerization initiator having a monoacylphosphine structure include Omnirad TPO N (manufactured by IGM Resins B. V), Omnirad TPO-L (manufactured by IGM Resins B. V), and the like.

Examples of the radical polymerization initiator having a bisacylphosphine structure that is not included in the initiator (A-1) are as follows. Examples of the polymerization initiator include bis(2,4,6-trimethylbenzoyl)phenylphosphineoxide, bis(2,6-dimethylbenzoyl)phenylphosphineoxide, bis(2,4,6-trimethylbenzoyl)-2-methoxyphenylphosphineoxide, bis(2,6-dimethylbenzoyl)-2-methoxyphenylphosphineoxide, bis(2,4,6-trimethylbenzoyl)-2,4-dimethoxyphenylphosphineoxide, bis(2,6-dimethylbenzoyl)-2,4-dimethoxyphenylphosphineoxide, bis(2,4,6-trimethylbenzoyl)-2,4-dipentyloxyphenylphosphineoxide, and bis(2,6-dimethylbenzoyl)-2,4-dipentyloxyphenylphosphineoxide.

Examples of commercially available products of the radical polymerization initiator having a bisacylphosphine structure that are not included in the initiator (A-1) include Omnirad 819 (manufactured by IGM Resins B. V).

Examples of commercially available products of the radical polymerization initiator having an alkylphenone structure include the following:
Omnirad 184 (manufactured by IGM Resins B. V), Omnirad 369 (manufactured by IGM Resins B. V), Omnirad 379 (manufactured by IGM Resins B. V), Omnirad 907 (manufactured by IGM Resins B. V), and ESACURE KIP150 (manufactured by IGM Resins B. V, "ESACURE" is a registered trademark of the company),
and the like.

Examples of the radical polymerization initiator having an acetophenone structure include the following:
diethoxyacetophenone, 2-hydroxy-2-methyl-1-phenylpropan-1-one, benzyl dimethyl ketal, 1-(4-isopropylphenyl)-2-hydroxy-2-methylpropan-1-one, 4-(2-hydroxyethoxy)phenyl-(2-hydroxy-2-propyl)ketone, 1-hydroxycyclohexyl-phenyl ketone, 2-methyl-2-morpholino (4-methylthiophenyl)propan-1-one, and 2-benzyl-2-dimethylamino-1-(4-morpholinophenyl)-butanone, and the like.

Examples of the radical polymerization initiator having a thioxanthone structure include 2-isopropylthioxanthone, 2,4-dimethylthioxanthone, 2,4-diethylthioxanthone, and 2,4-dichlorothioxanthone.

Examples of commercially available products of the radical polymerization initiator having a thioxanthone structure include SPEEDCURE 7010 (manufactured by Arkema), SPEEDCURE ITX (manufactured by Arkema), and SPEEDCURE 2-ITX (manufactured by Arkema).

Examples of the radical polymerization initiator having a benzophenone structure include benzophenone, methyl o-benzoylbenzoate, 4-phenylbenzophenone, 4,4'-dichlorobenzophenone, hydroxybenzophenone, 4-benzoyl-4'-methyl-diphenyl sulfide, acrylated benzophenone, 3,3',4,4'-tetra (t-butylperoxycarbonyl) benzophenone, and 3,3'-dimethyl-4-methoxybenzophenone.

Examples of the aminobenzophenone-based initiator include Michler's ketone and 4,4'-diethylaminobenzophenone.

Examples of commercially available products of the radical polymerization initiator having a benzophenone structure include SPEEDCURE 7005 (manufactured by Arkema) and Omnipol BP (manufactured by IGM Resins B. V).

Examples of the radical polymerization initiator having a benzoin structure include benzoin, benzoin methyl ether, benzoin isopropyl ether, and the like.

Examples of the cationic polymerization initiator contained in the initiator (A-2) include salts of aromatic onium compounds, sulfonates that generate sulfonic acid, halides that photogenerate hydrogen halide, and iron-allene complexes.

Examples of the onium include diazonium, ammonium, iodonium, sulfonium and phosphonium. Examples of counterions forming salts of aromatic onium compounds include B(C₆F₅)⁴, PF⁶, AsF⁶, SbF⁶ and CF₃SO³⁻.

Examples of the aromatic onium compound include compounds described in paragraph 0134 of Japanese Unexamined Patent Publication No. 2005-255821. Examples of the sulfonates that generate a sulfonic acid include compounds described in paragraph 0136 of Japanese Unexamined Patent Publication No. 2005-255821. In addition, examples of the sulfonates that generate a sulfonic acid include the compound described in claim 1 of Japanese Unexamined Patent Publication No. 2004-91698 and the compound described in claim 1 of Japanese Translation of PCT International Publication 2006-518332. Examples of the halides that photogenerate a hydrogen halide include compounds described in paragraph 0138 of Japanese Unexamined Patent Publication No. 2005-255821. Examples of the iron-allene complexes include compounds described in paragraph 0140 of Japanese Unexamined Patent Publication No. 2005-255821.

Examples of commercially available products of the cationic polymerization initiator include CPI-100P (manufactured by San-Apro Ltd), Omnicat 250 (manufactured by IGM Resins B. V), triphenylsulfoniumbromide and the like.

Among the above, it is preferable to include a radical polymerization initiator having a thioxanthone structure as the initiator (A-2). An initiator (A-2) having such a configuration has high compatibility with the initiator (A-1) and can compensate for the sensitivity in a wavelength region where absorption by the initiator (A-1) is relatively small. Therefore, an inkjet ink having high sensitivity in a wide band can be obtained.

### 1-1-3. Other properties of polymerization initiator (A)

The content of the (A) polymerization initiator is preferably 0.5% by mass to 20.0% by mass based on the total mass of the inkjet ink, and more preferably 3.0% by mass to 15.0% by mass. When the content of the (A) polymerization initiator is 0.5% by mass or more, crosslinked structures can be sufficiently formed, and therefore, the curability is easily enhanced. As a result, the above-described effects of improving the surface curability, gloss uniformity, and abrasion resistance of the image are easily obtained. When the content of the (A) polymerization initiator is 20.0% by mass or less, the amount of radicals to be generated does not become too large, and the frequency of deactivation due to recombination of radicals can be reduced, so that the curability is easily enhanced. As a result, when the content is in the above range, the surface curability and abrasion resistance of the image are easily enhanced.

The content of the initiator (A-1) is preferably 0.5% by mass to 15.0% by mass based on the total mass of the inkjet ink, more preferably 2.0% by mass to 10.0% by mass, and even more preferably 3.0% by mass or more and less than 8.0% by mass. When the content of the initiator (A-1) is 0.5% by mass or more, crosslinked structures can be sufficiently formed, and therefore, the curability is easily enhanced. As a result, the above-described effects of improving the surface curability, gloss uniformity, and abrasion resistance of the image are easily obtained. When the content of the initiator (A-1) is 15.0 mass% or less, the amount of generated radicals does not become excessively large, and the frequency of deactivation due to recombination of radicals can be reduced, so that the curability tends to be enhanced. As a result, when the content is in the above range, the surface curability and abrasion resistance of the image are easily enhanced.

The mass ratio (A-1:A-2) of the content of the initiator (A-1) to the content of the initiator (A-2) in the (A) polymerization initiator contained in the inkjet ink is preferably 25:75 to 100:0, and more preferably 40:60 to 100:0. When the content of the initiator (A-1) is increased, the above-described effect of increasing the surface curability and the abrasion resistance of the image is easily obtained.

The initiator (A-1) preferably has the absorption maximum value in the region from 350 nm to 450 nm. The maximum value of absorbance of the initiator (A-1) at wavelength of light ranging from 350 nm to 450 nm is preferably 1.00 to 8.00.

The wavelength at which the initiator (A-2) has the absorption maximum value is not particularly limited, and the initiator (A-2) may be a compound having the absorption maximum value in the region from 270 nm to 340 nm or in the region from 350 nm to 450 nm.

The wavelength exhibiting the maximum absorption value and the absorbance of the initiator (A-1), and the wavelength exhibiting the maximum absorption value of the initiator (A-2) are values measured with a spectrophotometer. The transmittance in tripropylene glycol diacrylate containing 0.01 mass% of the (A) polymerization initiator is measured using a spectrophotometer (for example, "UV-2550" (manufactured by Shimadzu Corporation)) to obtain an absorption spectrum, and the wavelength exhibiting the maximum absorption value is measured. Next, the value of the transmittance at the wavelength showing the maximum absorption value (which can be obtained by substituting Equation (2)) into Equation (3) below) is calculated. $Transmittance \left(% T\right) = \left(I/I0\right) \times 100 %$ $\begin{matrix}Absorbance \left(A\right) = - log \left(% T/100\right) \\ = - log \left(I/I0\right) \\ = log \left(I0/I\right)\end{matrix}$ (I0: Radiant exitance of input light, I: Radiant exitance after transmission)

### 1-2. (B) polymerizable compound

The polymerizable compound (B) may be a radically polymerizable compound, a cationically polymerizable compound, or a mixture thereof. Among these, from the viewpoint of enhancing the crosslinkability by the initiator (A-1), it is preferable that the (B) polymerizable compound has a radically polymerizable compound, and it is more preferable that the (B) polymerizable compound consists of a radically polymerizable compound. Furthermore, the (B) polymerizable compound is preferably a photopolymerizable compound that is polymerized by light.

The radically polymerizable compound is a polymerizable compound having a radically polymerizable ethylenically unsaturated bond in the molecule, and is preferably a compound having a vinyl group or a (meth)acryloyl group (hereinafter, also simply referred to as "(meth)acrylate"), and more preferably a compound having a (meth)acryloyl group. Examples of the cationically polymerizable compound include epoxy compounds, vinyl ether compounds, and oxetane compounds.

In addition, the polymerizable compound (B) preferably has an alkylene oxide group. In particular, the polymerizable compound (B) preferably includes an ethylene oxide group (hereinafter, also simply referred to as an "EO group") or a propylene oxide group (hereinafter, also simply referred to as a "PO group"), among the alkylene oxide groups. With an alkylene oxide group, the compound has a flexible side chain structure, and therefore the mobility of a functional group having an unsaturated bond is enhanced, and the photosensitivity is easily enhanced. Furthermore, with an alkylene oxide group, the compound is more likely to be encapsulated in a card house structure when the ink is gelled at a low temperature, and is more likely to be compatible with other ink components even at a high temperature. Further, with an alkylene oxide group, curing shrinkage is small, and thus curling of a printed material during image formation is less likely to occur.

The ratio of the sum of the mass of the polymerizable compound containing an EO group and the mass of the polymerizable compound containing a PO group to the total mass of the polymerizable compound (B) is preferably 30% by mass or more. The upper limit value is not particularly limited, but is, for example, 100% by mass or less.

The content of the (B) polymerizable compound is preferably 1.0% by mass to 97.0% by mass based on the total mass of the inkjet ink, and more preferably 30.0% by mass to 95.0% by mass. Similarly, the content of the (B) polymerizable compound is more preferably 50.0% by mass to 90.0% by mass, still more preferably 70.0% by mass to 90.0% by mass, based on the total mass of the inkjet ink.

### 1-2-1. (B-1) Polymerizable compound having two or more polymerizable functional groups

The (B) polymerizable compound includes (B-1) a polymerizable compound having two or more polymerizable functional groups (hereinafter, also simply referred to as "polymerizable compound (B-1)").

The polymerizable compound (B-1) preferably contains a compound having two or more radically polymerizable ethylenically unsaturated bonds in the molecule from the viewpoint of enhancing the crosslinking property by the initiator (A-1). From the same viewpoint, the polymerizable compound (B-1) is more preferably composed of only a compound having two or more radically polymerizable ethylenically unsaturated bonds. In particular, the functional group having a radically polymerizable ethylenically unsaturated bond is preferably a vinyl group or a (meth)acryloyl group, and more preferably a (meth)acryloyl group.

Furthermore, as described above, the polymerizable compound (B-1) preferably has an alkylene oxide group. In particular, it is preferable to include an EO group or a PO group among alkylene oxide groups.

Examples of the compound having two or more (meth)acryloyl groups include the following:
difunctional (meth)acrylates including triethylene glycol di(meth)acrylate, tetraethylene glycol di(meth)acrylate, polyethylene glycol di(meth)acrylate, dipropylene glycol di(meth)acrylate, tripropylene glycol di(meth)acrylate, polypropylene glycol di(meth)acrylate, 1,4-butanediol di(meth)acrylate, 1,6-hexanediol di(meth)acrylate, 1,9-nonanediol di(meth)acrylate, neopentyl glycol di(meth)acrylate, tricyclodecanedimethanol di(meth)acrylate, dimethylol-tricyclodecane di(meth)acrylate, bisphenol A-type di(meth)acrylate, hydroxypivalate neopentyl glycol di(meth)acrylate, polytetramethylene glycol di(meth)acrylate, polyethylene glycol di(meth)acrylate, dipropylene glycol di(meth)acrylate, and tripropylene glycol di(meth)acrylate,
tri- or higher functional (meth)acrylates including trimethylolpropane tri(meth)acrylate, pentaerythritol tri(meth)acrylate, pentaerythritol tetra(meth)acrylate, dipentaerythritol hexa(meth)acrylate, trimethylolpropane tetra(meth)acrylate, glycerolpropoxy tri(meth)acrylate, and pentaerythritol ethoxy tetra(meth)acrylate,
EO-modified polyfunctional (meth)acrylates such as an EO-modified product of 1,6-hexanediol di(meth)acrylate, an EO-modified product of pentaerythritol tetra(meth)acrylate, an EO-modified product of dipentaerythritol penta(meth)acrylate, an EO-modified product of dipentaerythritol hexa(meth)acrylate, an EO-modified product of trimethylolpropane tri(meth)acrylate, and an EO-modified product of bisphenol-A di(meth)acrylate,
PO-modified polyfunctional (meth)acrylates such as a PO-modified product of neopentyl glycol di(meth)acrylate, a PO-modified product of trimethylolpropane tri(meth)acrylate, a PO-modified product of glyceryl tri(meth)acrylate, and a PO-modified product of bisphenol-A di(meth)acrylate, and the like.

Examples of commercially available (meth)acrylates having alkylene oxide groups include the following:
CD561, SR454, SR499, and SR494 (all manufactured by Sartomer Company, Inc), NK Ester A-400, NK Ester A-600, NK Ester 9G, NK Ester 14G, NK Ester DOD-N, and NK Ester A-DCP and NK Ester DCP (all manufactured by Shin - Nakamura Chemical Co., Ltd), and the like.

Examples of the compound having two or more vinyl ether groups include di-or trivinyl ether compounds and the like, including ethylene glycol divinyl ether, diethylene glycol divinyl ether, triethylene glycol divinyl ether, propylene glycol divinyl ether, dipropylene glycol divinyl ether, butanediol divinyl ether, hexanediol divinyl ether, cyclohexane dimethanol divinyl ether, trimethylolpropane trivinyl ether, and the like.

Furthermore, as described above, the polymerizable compound (B-1) may or may not contain a cationically polymerizable compound. Examples of the cationically polymerizable compound include epoxy compounds, vinyl ether compounds, and oxetane compounds. The vinyl ether compound is a compound having both radical polymerizability and cationic polymerizability.

Examples of the compound having two or more epoxy groups include the following:
alicyclic epoxy resins such as 3,4-epoxycyclohexylmethyl-3',4'-epoxycyclohexanecarboxylate, bis(3,4-epoxycyclohexylmethyl)adipate, ε-caprolactone-modified 3,4-epoxycyclohexylmethyl-3',4'-epoxycyclohexanecarboxylate, 1-methyl-4-(2-methyloxiranyl)-7-oxabicyclo[4,1,0]heptane, 2-(3,4-epoxycyclohexyl-5,5-spiro-3,4-epoxy)cyclohexanone-meta-dioxane, and bis(2,3-epoxycyclopentyl)ether,
aliphatic epoxy compounds including diglycidyl ether of 1,4-butanediol, diglycidyl ether of 1,6-hexanediol, triglycidyl ether of glycerin, triglycidyl ether of trimethylolpropane, diglycidyl ether of polyethylene glycol, diglycidyl ether of propylene glycol, and polyglycidyl ethers of polyether polyols obtained by adding one or more alkylene oxides (such as ethylene oxide and propylene oxide) to aliphatic polyhydric alcohols such as ethylene glycol, propylene glycol, and glycerin,
aromatic epoxy compounds including di-or polyglycidyl ethers of bisphenol A or alkylene oxide adducts thereof, di-or polyglycidyl ethers of hydrogenated bisphenol A or alkylene oxide adducts thereof, and novolac-type epoxy resin, and the like.

Examples of the compound having two or more oxetane groups include 1,4-bis{[(3-ethyl-3-oxetanyl)methoxy]methyl} benzene, and di[1-ethyl(3-oxetanyl)]methyl ether.

The content of the polymerizable compound (B-1) in the inkjet ink is preferably 1.0 % by mass to 97.0 % by mass, more preferably 30.0 % by mass to 95.0 % by mass, and even more preferably 30.0 % by mass to 90.0 % by mass.

When a mass ratio ((B-1)/(A)) is calculated by using the content mass of the polymerizable compound (B-1) as a numerator and the content mass of the (A) polymerization initiator as a denominator, preferred range is as follows. The mass ratio ((B-1)/(A)) is preferably more than 0.0 and 40.0 or less, more preferably 5.0 to 30.0, even more preferably 5.0 to 20.0, and even more preferably 5.0 to 15.0. When the mass ratio ((B-1)/(A)) is greater (the amount of the polymerizable compound (B-1) is greater), radicals generated from the (A) polymerization initiator can be prevented from recombining with each other and being deactivated, and therefore, the curability is more likely to be enhanced. As a result, the above-described effects of improving the surface curability, gloss uniformity, and abrasion resistance of the image are easily obtained. When the mass ratio ((B-1)/(A)) is less than 40.0 (the amount of the polymerization initiator (A) is increased), generation of an unreacted component (B-1) can be suppressed, and therefore, the curability is more likely to be enhanced. As a result, the above-described effects of improving the surface curability, gloss uniformity, and abrasion resistance of the image are easily obtained.

The preferred range of the mass ratio when the content mass of the (meth)acrylate contained in the polymerizable compound (B-1) is a numerator and the content mass of the (A) polymerization initiator is a denominator is also the same as described above. That is, the mass ratio between the (meth)acrylate contained in the polymerizable compound (B-1) and the (A) polymerization initiator is preferably more than 0.0 and 40.0 or less, more preferably 5.0 to 30.0, even more preferably 5.0 to 20.0, and even more preferably 5.0 to 15.0. The reason for the upper and lower limits is also the same as described above.

### 1-2-2. (B-2) Other polymerizable compound

The (B-2) other polymerizable compound (hereinafter, also simply referred to as "polymerizable compound (B-2)") is a polymerizable compound which is not included in the (B-1) polymerizable compounds having two or more polymerizable functional groups.

Examples of the polymerizable compound (B-2) include polymerizable compounds having one polymerizable functional group.

From the viewpoint of adjusting the crosslinkability by the initiator (A-1), the polymerizable compound (B-2) preferably contains a compound having one radically polymerizable ethylenically unsaturated bond in the molecule, and more preferably is a compound having one radically polymerizable ethylenically unsaturated bond. In particular, the functional group having a radically polymerizable ethylenically unsaturated bond is preferably a vinyl group or a (meth)acryloyl group, and more preferably a (meth)acryloyl group.

Furthermore, as described above, the polymerizable compound (B-2) preferably has an alkylene oxide group. In particular, it is preferable to include an EO group or a PO group among alkylene oxide groups.

Examples of the compound having one (meth)acryloyl group include the following:
(meth) acrylates such as isoamyl (meth)acrylate, stearyl (meth)acrylate, isobornyl (meth)acrylate, lauryl (meth)acrylate, octyl (meth)acrylate, decyl (meth)acrylate, isomyristyl (meth)acrylate, isostearyl (meth)acrylate, 2-phenoxyethyl (meth)acrylate, 2-ethylhexyl-diglycol (meth)acrylate, 2-hydroxybutyl (meth)acrylate, 2-(meth)acryloyloxyethylhexahydrophthalic acid, butoxyethyl (meth)acrylate, ethoxydiethylene glycol (meth)acrylate, methoxydiethylene glycol (meth)acrylate, methoxypolyethylene glycol (meth)acrylate, methoxypropylene glycol (meth)acrylate, o-phenylphenoxyethyl (meth)acrylate, m-phenoxybenzyl (meth)acrylate, cyclic trimethylolpropane formal (meth)acrylate, ethoxylated phenoxy (meth)acrylate, phenol (meth)acrylate, alkoxylated phenol (meth)acrylate, nonylphenol (meth)acrylate, tetrahydrofurfuryl (meth)acrylate, isobornyl (meth)acrylate, 2-hydroxyethyl (meth)acrylate, 2-hydroxypropyl (meth)acrylate, 2-hydroxy-3-phenoxypropyl (meth)acrylate, 2-hydroxy-o-phenylphenolpropyl (meth)acrylate, 2-(meth)acryloyloxyethylsuccinic acid, 2-(meth)acryloyloxyethylphthalic acid, 2-(meth)acryloyloxyethyl-2-hydroxyethyl-phthalic acid and t-butylcyclohexyl (meth)acrylate,
EO-modified monofunctional (meth)acrylates such as 4EO-modified phenol acrylate and nonylphenol 4EO-modified acrylate,
unsaturated carboxylic acids such as (meth)acrylic acid, itaconic acid, crotonic acid, isocrotonic acid, and maleic acid, and salts thereof, unsaturated carboxylic acid ester compounds, unsaturated carboxylic acid urethane compounds, unsaturated carboxylic acid amide compounds, and anhydrides thereof, and the like.

In addition, examples of the compound having one radically polymerizable ethylenically unsaturated bond other than the above-described compounds include acrylonitriles and styrenes.

Examples of the compound having one vinyl ether group include monovinyl ether compounds such as ethyl vinyl ether, n-butyl vinyl ether, isobutyl vinyl ether, octadecyl vinyl ether, cyclohexyl vinyl ether, hydroxybutyl vinyl ether, 2-ethylhexyl vinyl ether, cyclohexanedimethanol monovinyl ether, n-propyl vinyl ether, isopropyl vinyl ether, isopropenyl ether-o-propylene carbonate, dodecyl vinyl ether, diethylene glycol monovinyl ether, and octadecyl vinyl ether, and the like.

Further, the polymerizable compound (B-2) may or may not contain a cationically polymerizable compound. Examples of the cationically polymerizable compound include epoxy compounds, vinyl ether compounds, and oxetane compounds. The vinyl ether compound is a compound having both radical polymerizability and cationic polymerizability.

Examples of the compound having one epoxy group include vinylcyclohexene monoepoxide.

Examples of the compound having one oxetane group include 3-hydroxymethyl-3-methyloxetane, 3-hydroxymethyl-3-ethyloxetane, 3-hydroxymethyl-3-propyloxetane, 3-hydroxymethyl-3-n-butyloxetane, 3-hydroxymethyl-3-phenyloxetane, 3-hydroxymethyl-3-benzyloxetane, 3-hydroxyethyl-3-methyloxetane, 3-hydroxyethyl-3-ethyloxetane, 3-hydroxyethyl-3-propyloxetane, 3-hydroxyethyl-3-phenyloxetane, 3-hydroxypropyl-3-methyloxetane, 3-hydroxypropyl-3-ethyloxetane, 3-hydroxypropyl-3-propyloxetane, 3-hydroxypropyl-3-phenyloxetane, 3-hydroxybutyl-3-methyloxetane, 3-ethyl-3-(2-ethylhexyloxymethyl) oxetane, and the like.

The content of the polymerizable compound (B-2) in the inkjet ink is preferably 0.0% by mass to 50.0% by mass, more preferably 5.0% by mass to 30.0% by mass, and more preferably 10.0% by mass to 25.0% by mass.

### 1-3. (C) Gelling agent

The inkjet ink according to the present embodiment preferably contains (C) a gelling agent. The gelling agent (C) is a compound that turns the inkjet ink into a gel state at normal temperature, and turns the inkjet ink into a flowable state when heated. The gelling agent (C) can gel the inkjet ink applied to a base material at an early stage and enhance the pinning properties of the inkjet ink.

The gelling agent (C) can turn an inkjet ink droplet landed on a base material into a gel state to temporarily fix (pin) the droplet. When the inkjet ink is pinned in a gel state, wet-spreading of the inkjet ink is suppressed and adjacent dots are less likely to be mixed, thus allowing formation of a higher-definition image. In addition, when the inkjet ink becomes a gel state, entry of oxygen in the environment into inkjet ink droplets is suppressed and curing inhibition due to oxygen is less likely to occur, and therefore, a high-definition image can be formed at a higher speed.

The (C) gelling agent is preferably a compound that dissolves in the actinic radiation-polymerizable compound contained in the ink at a temperature higher than the gelation temperature of the inkjet ink, and crystallizes in the ink at a temperature equal to or lower than the gelation temperature of the ink. The term "gelation temperature" refers to a temperature at which, when an inkjet ink that has been solated or liquefied by heating is cooled, the ink undergoes a phase transition from sol to gel, and the viscosity of the ink suddenly changes. Specifically, when a solated or liquefied ink is cooled while its viscosity is measured with a rheometer (for example, MCR300, manufactured by Anton Paar), the temperature at which the viscosity rapidly increases can be used as the gelation temperature of the ink.

The gelling agent (C) crystallizes in the ink at a temperature equal to or lower than the gelation temperature of the inkjet ink. Then, it is preferable to form a structure in which the (A) polymerization initiator and the (B) polymerizable compound are encapsulated in a three dimensional space formed by the (C) gelling agent crystallized into a plate shape (such a structure is hereinafter referred to as "card house structure"). When the card house structure is formed, the (B) polymerizable compound is held in the space, so that an inkjet ink droplet is less likely to wet and spread, and the pinning properties of the inkjet ink are further enhanced. When the pinning properties of the inkjet ink is enhanced, inkjet ink droplets landed on a base material are less likely to be mixed with each other, and a higher-definition image can be formed. In addition, since the (A) polymerization initiator and the (B) polymerizable compound are held in a limited space, a polymerization chain reaction is more likely to occur in a short time, and deactivation or the like is less likely to occur. As a result, sufficient curability is ensured with a smaller light amount, and the surface curability and the abrasion resistance are easily enhanced.

Examples of the (C) gelling agent that easily forms a card house structure include the following:
aliphatic ketones, aliphatic esters, petroleum waxes, vegetable waxes, animal waxes, mineral waxes, hydrogenated castor oil, modified waxes, higher fatty acid, higher alcohol, hydroxystearic acid, fatty acid amide including N-substituted fatty acid amide and special fatty acid amide, higher amines, sucrose fatty acid esters, synthetic waxes, dibenzylidene sorbitol, dimer acids, and dimer diols, and the like.

Examples of the aliphatic ketone include dilignoceryl ketone, dibehenyl ketone, distearyl ketone, dieicosyl ketone, dipalmityl ketone, dilauryl ketone, dimyristyl ketone, myristyl palmityl ketone, and palmityl stearyl ketone.

Examples of the aliphatic esters include the follwing:
fatty acid esters of monoalcohols such as behenyl behenate, icosyl icosanoate, stearyl stearate, palmityl stearate, myristyl myristate, cetyl myristate, and oleyl palmitate,
fatty acid esters of polyhydric alcohols, such as glycerin fatty acid esters, sorbitan fatty acid esters, propylene glycol fatty acid esters, ethylene glycol fatty acid esters, and polyoxyethylene fatty acid esters, and the like.

Examples of commercially available products of the aliphatic ester include EMALEX series (manufactured by Nippon Emulsion Co., Ltd. ("EMALEX" is a registered trade mark of the company)), RIKEMAL series and POEM series (manufactured by Riken Vitamin Co., Ltd. ("RIKEMAL" and "POEM" are both registered trade marks of the company)).

Examples of the petroleum wax include petroleum-based waxes including paraffin wax, microcrystalline wax, and petrolatum.

Examples of the vegetable wax include candelilla wax, carnauba wax, rice wax, Japan wax, jojoba oil, jojoba solid wax, and jojoba ester.

Examples of the animal wax include beeswax, lanolin and spermaceti.

Examples of mineral waxes include montan waxes and hydrogenated waxes.

Examples of the modified wax include montan wax derivatives, paraffin wax derivatives, microcrystalline wax derivatives, 12-hydroxystearic acid derivatives, and polyethylene wax derivatives.

Examples of the higher fatty acid include behenic acid, arachidic acid, stearic acid, palmitic acid, myristic acid, lauric acid, oleic acid, and erucic acid.

Examples of the higher alcohol include stearyl alcohol and behenyl alcohol.

An example of hydroxystearic acid includes 12-hydroxystearic acid.

Examples of the fatty acid amide include lauric acid amide, stearic acid amide, behenic acid amide, oleic acid amide, erucic acid amide, ricinoleic acid amide, and 12-hydroxystearic acid amide.

Examples of commercially available fatty acid amide include NIKKAMIDE series, manufactured by Nippon Kasei Chemical Co., Ltd. ("NIKKAMIDE" is a registered trademark of the company), ITOWAX series, manufactured by Itoh Oil Chemicals, Inc, and FATTYAMID series, manufactured by Kao Corporation.

Examples of the N-substituted fatty acid amide include N-stearyl stearic acid amide and N-oleyl palmitic acid amide.

Examples of the special fatty acid amide include N,N'-ethylenebisstearylamide, N,N'-ethylenebis-12-hydroxystearylamide, and N,N'-xylylenebisstearylamide.

Examples of the higher amines include dodecylamine, tetradecylamine and octadecylamine.

Examples of the sucrose fatty acid ester include sucrose stearic acid and sucrose palmitic acid.

Examples of commercially available products of sucrose fatty acid esters include Ryoto Sugar Ester, manufactured by Mitsubishi Chemical Foods Corporation ("Ryoto" is a registered trademark of the company).

Examples of the synthetic wax include polyethylene wax and α-olefin-maleic anhydride copolymer wax.

Examples of commercially available products of the synthetic wax include UNILIN series manufactured by Baker - Petrolite ("UNILIN" is a registered trade mark of the company).

Examples of the dibenzylidene sorbitol include 1,3:2,4-bis-O-benzylidene-D-glucitol.

Examples of commercially available products of dibenzylidene sorbitol include GELOL D, manufactured by New Japan Chemical Co., Ltd. ("GELOL" is a registered trademark of the company).

Examples of commercially available products of the dimer diol include PRIPOR series, manufactured by CRODA ("PRIPOR" is a registered trademark of the company).

Of these, from the viewpoint of more fully obtaining the effect of promoting the crosslinking reaction due to the card house structure, the (C) gelling agent is preferably an aliphatic ketone, an aliphatic ester, a higher fatty acid, and a higher alcohol. From the same viewpoint, the (C) gelling agent is more preferably an aliphatic ketone represented by the following General formula (G1) or an aliphatic ester represented by the following General formula (G2). The (C) gelling agent may be included alone or in combination of two or more types thereof.

General formula (G1): Rₐ-CO-R_{b}

General formula (G2): R_{c}-COO-R_{d}

Rₐ and R_{b} in General formula (G1) independently represent a linear hydrocarbon group which has 12 to 26 carbon atoms and may have a branched chain, and R_{c} and R_{d} in General formula (G2) independently represent a linear hydrocarbon group which has 12 to 26 carbon atoms and may have a branched chain. The gelling agents (C) represented by General formula (G1) and (G2) have high crystallinity since the number of carbon atoms in each of Rₐ to Rₐ is 12 or more, and thus can generate a sufficiently wide space inside the card house structure. Therefore, the effect of improving folding crack resistance due to encapsulation of the (B) polymerizable compound is more sufficiently exhibited. In addition, the gelling agents (C) represented by General formula (G1) and (G2) have 26 or less carbon atoms in each of Rₐ to Rₐ, and thus have a moderately low melting temperature and do not excessively increase the solation temperature of the inkjet ink. Therefore, it is possible to lower the heating temperature of the inkjet ink at the time of discharge.

Examples of the aliphatic ketone represented by General formula (G1) include dilignoceryl ketone (number of carbon atoms: 23-24), dibehenyl ketone (number of carbon atoms: 21-22), distearyl ketone (number of carbon atoms: 17-18), dieicosyl ketone (number of carbon atoms: 19-20), dipalmityl ketone (number of carbon atoms: 15-16), dimyristyl ketone (number of carbon atoms: 13-14), dilauryl ketone (number of carbon atoms: 11-12), lauryl myristyl ketone (number of carbon atoms: 11-14), lauryl palmityl ketone (11-16), myristyl palmityl ketone (13-16), myristyl stearyl ketone (13-18), myristyl behenyl ketone (13-22), palmityl stearyl ketone (15-18), palmityl behenyl ketone (15-22), and stearyl behenyl ketone (17-22). The number of carbon atoms in the above parentheses represents the number of carbon atoms of each of two hydrocarbon groups separated by the carbonyl group.

Examples of commercially available products of the compound represented by General formula (G1) include 18-Pentatriacontanon and Hentriacontan -16-on (both manufactured by Alfa Aeser), Kao Wax T1 (manufactured by Kao Corporation), and the like.

Examples of the aliphatic ester represented by the General formula (G2) include behenyl behenate (number of carbon atoms: 21-22), icosyl icosanoate (number of carbon atoms: 19-20), stearyl stearate (number of carbon atoms: 17-18), palmityl stearate (number of carbon atoms: 17-16), lauryl stearate (number of carbon atoms: 17-12), cetyl palmitate (number of carbon atoms: 15-16), stearyl palmitate (number of carbon atoms: 15-18), myristyl myristate (number of carbon atoms: 13-14), cetyl myristate (number of carbon atoms: 13-16), octyldodecyl myristate (number of carbon atoms: 13-20), stearyl oleate (number of carbon atoms: 17-18), stearyl erucate (number of carbon atoms: 21-18), stearyl linoleate (number of carbon atoms: 17-18), behenyl oleate (number of carbon atoms: 18-22), and arachidyl linoleate (number of carbon atoms: 17-20). The number of carbon atoms in the above parentheses represents the number of carbon atoms of each of two hydrocarbon groups separated by the ester group.

Examples of commercially available products of the aliphatic ester represented by General formula (G2) include UNISTER M-2222SL, SPERMACETI, Nissan Electol WEP-2 and Nissan Electol WEP-3 (all manufactured by NOF Corporation, "Unistar" and "Nissan Electol" are registered trademarks of the company), EXCEPARL SS and EXCEPARL MY-M (both manufactured by Kao Corporation, "EXCEPARL" is a registered trademark of the company), EMALEX CC-18 and EMALEX CC-10 (manufactured by Nippon Emulsion Co., Ltd., "EMALEX" is a registered trademark of the company), and AMREPS PC (manufactured by Kokyu Alcohol Kogyo Co., Ltd., "AMREPS" is a registered trademark of the company). These commercially available products are often mixtures of two or more types, and therefore, may be separated and purified as necessary to be contained in an ink.

The content of the gelling agent (C) is preferably 0.3% by mass to 10.0% by mass, more preferably 0.3% by mass to 8.0% by mass, even more preferably 1.0% by mass to 5.0% by mass, even more preferably 1.5% by mass or more and less than 5.0% by mass, and even more preferably 2.0% by mass or more and less than 4.0% by mass, based on the total mass of the ink. When the content of the gelling agent (C) is 0.3% by mass or more, the degrees of wetting and spreading of the respective inkjet ink droplets on the recording medium can be controlled to the same level, and the gloss difference in the image can be made less likely to occur. In addition, since the (A) polymerization initiator and the (B) polymerizable compound are held in a limited space, a polymerization chain reaction is more likely to occur in a short time, and deactivation or the like is less likely to occur. As a result, sufficient curability is ensured with a smaller light amount, and the surface curability and the abrasion resistance are easily enhanced. When the content of the (C) gelling agent is 10.0% by mass or less, the gelling agent is less likely to be precipitated on the surface of the formed image, gloss difference within the image can be less likely to occur, and the strength of the cured film can be increased to enhance the abrasion resistance.

### 1-4. Other Components

The inkjet ink may further contain other components such as a coloring agent, a dispersant, a surfactant, a polymerization inhibitor, or a polymerization initiation aid.

### 1-4-1. Coloring agent

The coloring agent may be a dye or a pigment, and is preferably a pigment from the viewpoint of forming an image having high weather resistance. The pigment can be selected from yellow pigments, red pigments, blue pigments, black pigments and white pigments depending on the color of the image to be formed or the image formed by assembling the images.

Examples of yellow pigments include C.I. Pigment Yellow (hereinafter, "C.I. Pigment Yellow" may be simply referred to as "PY") 1, PY 3, PY 12, PY 13, PY 14, PY 17, PY 34, PY 35, PY 37, PY 55, PY 74, PY 81, PY 83, PY 93, PY 94, PY 95, PY 97, PY 108, PY 109, PY 110, PY 137, PY 138, PY 139, PY 153, PY 154, PY 155, PY 157, PY 166, PY 167, PY 168, PY 180, PY 185, PY 193, and the like.

Examples of red pigments include C.I. Pigment Red (hereinafter, "C.I. Pigment Red" may be simply referred to as "PR") 3, PR 5, PR 19, PR 22, PR 31, PR 38, PR 43, PR 48:1, PR 48:2, PR 48:3, PR 48:4, PR 48:5, PR 49:1, PR 53:1, PR 57:1, PR 57:2, PR 58:4, PR 63:1, PR 81, PR 81:1, PR 81:2, PR 81:3, PR 81:4, PR 88, PR 104, PR 108, PR 112, PR 122, PR 123, PR 144, PR 146, PR 149, PR 166, PR 168, PR 169, PR 170, PR 177, PR 178, PR 179, PR 184, PR 185, PR 208, PR 216, PR 226, and PR 257, Pigment Violet (hereinafter, "C.I. Pigment Violet" may also be simply referred to as "PV") 3, PV 19, PV 23, PV 29, PV 30, PV 37, PV 50, and PV 88, Pigment Orange (hereinafter, "C.I. Pigment Orange" may also be simply referred to as "PO") 13, PO 16, PO2 0, PO 36, and the like.

Examples of blue pigments include Pigment Blue (hereinafter, "C. I. Pigment Blue" may be simply referred to as "PB") 1, PB 15, PB 15:1, PB 15:2, PB 15:3, PB 15:4, PB 15:6, PB 16, PB 17:1, PB 22, PB 27, PB 28, PB 29, PB 36, and PB 60.

Examples of green pigments include C. I. Pigment Green (hereinafter, also simply referred to as "PG") ) 7, PG 26, PG 36, and PG 50.

Examples of the black pigment include C. I. Pigment Black (hereinafter, "C. I. Pigment Black" is also simply referred to as "PBk") ) 7, PBk 26, and PBk 28.

Examples of the white pigment include inorganic pigments such as titanium oxide, zinc oxide, calcium carbonate, barium sulfate, and aluminum hydroxide. Of these, titanium oxide is preferable, and anatase type titanium oxide is preferable from the viewpoint of reducing the particle size of the white pigment, and rutile type titanium oxide is preferable from the viewpoint of enhancing the concealing properties of an image.

The volume average particle diameter of the pigment is preferably 0.08 to 0.5 µm from the viewpoint of further improving the storage stability and the discharge stability of the inkjet ink. The maximum particle diameter of the pigment is preferably 0.3 µm to 10 µm, and more preferably 0.3 µm to 3 µm.

The average particle diameter of the pigment particle means a value obtained by a dynamic light scattering method using Data Sizer Nano ZSP manufactured by Malvern Instruments Ltd. Since the ink containing the color material has a high concentration and does not transmit light when using this measurement device, the inkjet ink is diluted by 200 time and then measured. The measurement temperature is normal temperature (25°C).

The content of the pigment is preferably 0.1% by mass to 20.0% by mass and more preferably 0.4% by mass to 10.0% by mass based on the total mass of the inkjet ink. When the content of the pigment is 0.1% by mass or more, the color of the formed image can be sufficiently developed. Setting the content of the pigment to 20.0% by mass or less can further enhance the discharge stability of the inkjet ink.

### 1-4-2. Dispersant

The dispersibility of the coloring agent that is a pigment may be enhanced by a dispersant.

Examples of the dispersant include carboxylic acid esters having a hydroxy group, salts of a long-chain polyaminoamide and a high-molecular-weight acid ester, salts of a high-molecular-weight polycarboxylic acid, salts of a long-chain polyaminoamide and a polar acid ester, high-molecular-weight unsaturated acid esters, high-molecular-weight copolymers, modified polyurethanes, modified polyacrylates, polyether ester type anionic surfactants, naphthalenesulfonic acid-formalin condensate salts, aromatic sulfonic acid-formalin condensate salts, polyoxyethylene alkyl phosphate esters, polyoxyethylene nonylphenyl ether, and stearylamine acetate.

Examples of commercially available products of the dispersants include BYK-2164, BYK-168, BYK N-22024, BYK JET-9150, and BYK JET-9151 (hereinabove, manufactured by Bickham GmbH, "BYK" is a registered trade mark), EFKA 7701, EFKA 4310, EFKA 4320, and EFKA 4401 (manufactured by BASF), SOLSPERSE 24000GR and SOLSPERSE 39000 (manufactured by Lubrizol Corporation, "SOLSPERSE" is a registered trade mark), and Ajisper PB821 and Ajisper PB824 (manufactured by Ajinomoto Fine - Techno Co., Inc., "Ajisper" is a registered trade mark), and the like.

The content of the dispersant is, for example, preferably 1% by mass to 70% by mass, and more preferably 20% by mass to 70% by mass, based on the total mass of the pigment. When the content of the dispersant is set to 20% by mass or more based on the total mass of the pigment, the dispersant covers the surface of the pigment, and thus it is possible to make the aggregation of the pigments during the storage of the ink less likely to occur. When the content of the dispersant is set to 70% by mass or less based on the total mass of the pigment, association of the dispersant and the gelling agent is less likely to occur, and the inkjet ink landed on a base material can be more sufficiently gelled and pinned.

### 1-4-3. Surfactant

Examples of the surfactant include anionic surfactants such as dialkylsulfosuccinates, alkylnaphthalenesulfonates, and fatty acid salts; nonionic surfactants such as polyoxyethylene alkyl ethers, polyoxyethylene alkyl allyl ethers, acetylene glycols, and polyoxyethylene-polyoxypropylene block copolymers; cationic surfactants such as alkylamine salts, and quaternary ammonium salts; and silicone-based and fluorine-based surfactants.

Examples of commercially available silicone-based surfactants include the following:
KF-351A, KF-352A, KF-642 and X-22-4272 (manufactured by Shin - Etsu Chemical Co., Ltd),
BYK-307, BYK345, BYK347, and BYK348 (manufactured by BYK Japan KK, "BYK" is a registered trade mark), and
TSF4452 (manufactured by Toshiba Silicone Co., Ltd), and the like.

The content of the surfactant can be set to, for example, 0.001 mass% or more and less than 1.0 mass% based on the total mass of the inkjet ink.

### 1-4-4. polymerization inhibitor

Examples of the polymerization inhibitor include N-oxyl-based polymerization inhibitors, phenol-based polymerization inhibitors, quinone-based polymerization inhibitors, amine-based polymerization inhibitors, and copper dithiocarbamate-based polymerization inhibitors.

Examples of the polymerization inhibitor include (alkyl) phenols, hydroquinones, catechols, resorcinols, p-methoxyphenol, t-butylcatechol, t-butylhydroquinone, pyrogallol, 1,1-picrylhydrazyl, phenothiazine, p-benzoquinone, nitrosobenzene, 2,5-di-t-butyl-p-benzoquinone, dithiobenzoyl disulfide, picric acid, cupferron, aluminum N-nitrosophenylhydroxylamine, tri-p-nitrophenylmethyl, N-(3-oxyanilino-1,3-dimethylbutylidene) anilineoxide, dibutylcresol, cyclohexanoneoximecresol, guaiacol, o-isopropylphenol, butyraldoxime, methylethylketoxime and cyclohexanoneoxime.

The content of the polymerization inhibitor is, for example, preferably 0.01% by mass to 1% by mass and more preferably 0.05% by mass to 0.5% by mass based on the total mass of the inkjet ink.

### 1-4-5. Polymerization initiation aid

Examples of the polymerization initiator aid include tertiary amine compounds including aromatic tertiary amine compounds.

Examples of the aromatic tertiary amine compound include N,N-dimethylaniline, N,N-diethylaniline, N,N-dimethyl-p-toluidine, N,N-dimethylamino-p-benzoic acid ethyl ester, N,N-dimethylamino-p-benzoic acid isoamylethyl ester, N,N-dihydroxyethylaniline, triethylamine, and N,N-dimethylhexylamine.

### 1-5. Physical properties

The ink may or may not contain the (C) gelling agent. In the case of an ink containing no gelling agent, its viscosity at 25°C is preferably in the range of 3 mPa·s to 20 mPa·s, more preferably in the range of 4 mPa·s to 12 mPa·s.

In the case where the inkjet ink contains the (C) gelling agent, the viscosity at 80°C is preferably from 3 mPa·s to 20 mPa·s, and more preferably from 7 mPa·s to 9 mPa·s, from the viewpoint of further enhancing the ejection property from an inkjet head. In addition, the viscosity of the inkjet ink at 25°C is preferably 1000 mPa·s or more from the viewpoint of sufficiently gelling the inkjet ink when the temperature is lowered to normal temperature after landing.

In the case where the inkjet ink includes the (C) gelling agent, the inkjet ink preferably undergoes a sol-gel phase transition at a temperature of 40°C to 100°C. The gelation temperature of the inkjet ink is preferably 40°C to 70°C. When the gelation temperature of the inkjet ink is 40°C or higher, the ink quickly gels after landing on a base material, and thus the pinning properties become higher. When the gelation temperature of the ink is 100°C or less, the ink is less likely to be gelled at the time of ejection of the inkjet ink from an inkjet head, thus allowing the ink to be ejected more stably.

The viscosity at 25°C, the viscosity at 80°C, and the gelation temperature of the inkjet ink in the present application are values obtained by measuring a temperature change in the dynamic viscoelasticity of the ink with a rheometer. As the rheometer, for example, a stress control type rheometer Physica MCR series (manufactured by Anton Paar GmbH) is used. Specifically, the ink is heated to 100°C and cooled to 25°C under conditions of a shear rate of 11.7 (1/s) and a temperature lowering rate of 0.1°C/s, to measure a temperature change curve of viscosity. The viscosity at 40°C and the viscosity at 80°C are values obtained by reading the viscosities at 40°C and 80°C, respectively, in the temperature change curve of viscosity. The gelation temperature is a value obtained as a temperature at which the viscosity becomes 200 mPa·s in the temperature change curve of viscosity.

### 1-6. Preparation Method

The inkjet ink can be prepared by mixing the components described above. At this time, in order to increase the solubility of each component, it is preferable to mix the components while heating.

Note that a pigment dispersion liquid containing the pigment and the dispersant may be prepared in advance, and the remaining components may be added thereto and mixed. At this time, the pigment can be dispersed with, for example, a ball mill, a sand mill, an attritor, a roll mill, an agitator, a Henschel mixer, a colloid mill, an ultrasound homogenizer, a pearl mill, a wet-type jet mill, or a paint shaker.

### 2. Image forming method

The image forming method according to the present embodiment preferably includes the following steps:
applying the inkjet ink according to the present embodiment to a base material or an intermediate transfer member, and
irradiating the actinic radiation-curable inkjet ink with actinic radiation.

### 2-1. Step of applying inkjet ink to base material or intermediate transfer member

As the applying step, a known application method can be used.

The method of discharging the ink from the inkjet head may be either an on-demand method or a continuous method. The inkjet head of the on-demand system may be any of electro-mechanical transduction systems such as a single cavity type, a double cavity type, a bender type, a piston type, a share mode type, and a shared wall type, and electro-thermal transduction systems such as a thermal inkjet type and a bubble jet ("bubble jet" is a registered trademark of Canon Inc) type.

The type of the base material is not particularly limited, but for example, a non-absorbent base material made of plastic (plastic base material), a non-absorbent inorganic base material, absorbent paper (e.g., uncoated printing paper and coated printing paper), or the like is used. Examples of the plastic base material include polypropylene (PP) films, polyethylene terephthalate (PET) films, biaxially stretched polystyrene (OPS) films, biaxially stretched polypropylene (OPP) films, biaxially stretched nylon (ONy) films, polyvinyl chloride (PVC) films, polyethylene (PE) films, and triacetyl cellulose (TAC) films. Examples of other plastics include polycarbonate, (meth)acrylic resin, acrylonitrile-butadiene-styrene copolymer (ABS), polyacetal, polyvinyl alcohol (PVA), rubbers, and the like. Examples of the inorganic base material include paper or plastic film on which metal is laminated or vapor-deposited, metals, and glass. As the base material, a base material having a relatively small film thickness is preferably used.

In the case where the inkjet ink includes the (C) gelling agent, the inkjet ink is preferably discharged from an inkjet head in a heated state, from the viewpoint of further enhancing droplet discharge stability. The temperature of the ink when discharged is preferably from 35°C to 100°C, and more preferably from 35°C to 80°C, from the above-described viewpoints. The viscosity of the inkjet ink discharged from the inkjet head is preferably from 3 mPa·s to 20 mPa·s, more preferably from 7 mPa·s to 15 mPa·s, and even more preferably from 8 mPa·s to 13 mPa·s.

In the case where the inkjet ink includes the (C) gelling agent, the inkjet ink is preferably heated to a temperature that is greater than or equal to a temperature 10°C higher than a gelation temperature of the inkjet ink and less than or equal to a temperature 30°C higher than the gelation temperature. The temperature of the inkjet ink when an inkjet head is filled with the inkjet ink can increase the ejection property of the inkjet ink from the inkjet head. When the temperature of the inkjet ink in the inkjet head is equal to or higher than a temperature higher than the gelation temperature by 10°C, gelation of the inkjet ink in the inkjet head or on the nozzle surface is less likely to occur, and thus the discharge stability can be further enhanced. When the temperature of the inkjet ink in the inkjet head is equal to or lower than a temperature 30°C higher than the gelation temperature, the inkjet ink components are less likely to deteriorate during image formation.

The method of heating the inkjet ink is not particularly limited. For example, at least any of an ink supply system including an ink tank, a supply pipe, and a front chamber ink tank immediately before a head, a pipe with a filter, a piezo head, and the like can be heated to a predetermined temperature by any of a panel heater, a ribbon heater, and heat-retaining water.

From the viewpoint of facilitating image formation at a higher speed and further improving image quality, the droplet amount of the inkjet ink to be discharged is preferably from 2 pL to 20 pL.

Note that the inkjet ink discharged from the inkjet head may be applied directly to the base material, or the inkjet ink may be applied to an intermediate transfer member and then transferred from the intermediate transfer member to the base material.

### 2-2. Step of irradiating inkjet ink with actinic radiation

As the irradiating step, a known irradiation method can be used.

As described above, examples of the active energy ray include electron beams, ultraviolet rays, α-rays, γ-rays, and X-rays. Among these, ultraviolet rays and electron beams are preferable, and ultraviolet rays are more preferable. As described above, the initiator (A-1) favorably absorbs light with a wavelength in the range of 350 nm to 450 nm, and therefore, the inkjet ink according to the present embodiment is suitable when light having an intensity peak in the range of 350 nm to 450 nm is used. Similarly, light having an intensity peak in the range of 360 nm to 410 nm is more preferable. In addition, the ultraviolet rays are preferably emitted from a laser light emission diode (LED) light source. Since LEDs emit little radiant heat, they are less likely to dissolve inkjet ink when emitting actinic radiation, making it less likely to cause uneven gloss due to ink dissolution. Examples of the LED light source that emits ultraviolet rays include a 395 nm water-cooled LED (manufactured by Phoseon Technology).

From the viewpoint of sufficiently curing the inkjet ink, the peak irradiance of ultraviolet rays on the image surface is preferably from 0.5 W/cm² to 10 W/cm², and more preferably from 1 W/cm² to 5 W/cm².

In the step of curing, the inkjet ink landed in the step of landing on the base material is irradiated with actinic radiation to cure the inkjet ink and form an image. The actinic radiation is preferably emitted between 0.001 seconds and 1.0 seconds after the ink lands, and is more preferably emitted between 0.001 seconds and 0.5 seconds in order to form a high-definition image.

The irradiation with the actinic radiation may be divided into two stages, the actinic radiation may be emitted within the above-described preferable time range to temporary curing the inkjet ink, and the actinic radiation may be further emitted after the completion of the entire printing to full curing the inkjet ink. By dividing the irradiation with the actinic radiation into two stages, the shrinkage of the recording material which occurs at the time of curing the ink is less likely to occur.

From the viewpoint of more suitably exhibiting the effects of the present invention, it is preferable to control the surface temperature of the base material on the side on which the inkjet ink lands to 20°C to 40°C before the curing step or simultaneously with the curing step.

When the total ink film thickness after the inkjet ink landed on the base material is cured by irradiation with actinic radiation is set to be 2 µm to 20 µm, it is possible to more efficiently prevent the occurrence of curling and wrinkling of the base material, a change in the texture of the base material, and the like. The "total ink film thickness" means the sum of the values of the film thicknesses of all the inkjet ink applied or printed on the base material. The total ink film thickness can be, for example, an average value of the film thicknesses measured at a plurality of points where the landing amount of the inkjet ink is expected to be large.

### 3. Image

An image can be formed on the surface of the base material by the above-described method. The image can be used as any of various patterned resin films.

### Examples

Hereinafter, the present invention will be specifically described with reference to examples, but the scope of the present invention is not limited to the contents of examples.

### 1. Preparation of inkjet ink

### 1-1. Preparation of each component

The components used in the preparation of the inkjet ink are as follows.

### [(A) Polymerization initiator]

### (Initiator (A-1))

Polymerization initiator 1: a compound of the following chemical formula (1) in which R is an ethyl group
Polymerization initiator 2: a compound of the following chemical formula (1), in which R is a normal pentyl group
Polymerization initiator 3: a compound of the following chemical formula (1), in which R is a normal octyl group
Polymerization initiator 4: a compound of the following chemical formula (1), in which R is a normal decyl group

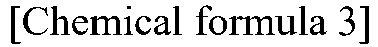

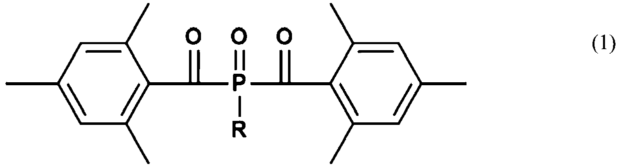

### (Initiator (A-2))

Polymerization initiator 5: 2,4,6-trimethylbenzoyl diphenyl phosphineoxide (Omnirad TPO N, manufactured by IGM Resins B. V).
Polymerization initiator 6: bis(1,4,6-trimethylbenzoyl) phenylphosphineoxide (Omnirad 819, manufactured by IGM Resins B. V).
Polymerization initiator 7: ethyl (2,4,6-trimethylbenzoyl) phenylphosphinate (Omnirad TPO-L, manufactured by IGM Resins B. V).
Polymerization initiator 8: 2-isopropylthioxanthone (SpeedCure 2 -ITX, manufactured by Arkema)

### [(B) polymerizable compound]

### (Polymerizable compound (B-1))

Polyfunctional monomer 1: tripropylene glycol diacrylate
Polyfunctional monomer 2: ethylene glycol #600 diacrylate
Polyfunctional monomer 3: 3PO modified trimethylolpropane triacrylate
Polyfunctional monomer 4: 3EO modified trimethylolpropane triacrylate
Polyfunctional monomer 5: EO-modified hexanediol diacrylate

### (Polymerizable compound (B-2))

Monofunctional monomer 1: 4EO modified phenol acrylate
Monofunctional monomer 2: nonylphenol 4EO modified acrylate
Monofunctional monomer 3: lauryl acrylate

### [Gelling agent]

Distearyl ketone was used as a gelling agent.

### 1-2. Preparation of pigment dispersion liquid

Nine parts by mass of a pigment dispersant (EFKA 7701, BasfSE) and 71 parts by mass of tripropylene glycol diacrylate were placed in a stainless steel beaker, and the mixture was heated and stirred for 1 hour while being heated to 65°C on a hot plate. Next, the mixture was cooled to room temperature, and 20 parts by mass of a cyan pigment (Pigment Blue 15:4, Chromaffin Blue 6332JC, manufactured by Dainichiseika Color & Chemicals Mfg. Co., Ltd.) was added thereto. Thereafter, the mixture was placed in a glass bottle together with 200 g zirconia beads (diameter: 0.3 mm, manufactured by NIKKATO CORPORATION), and the glass bottle was sealed. This pigment-containing liquid was subjected to dispersion treatment for 4 hours using a paint shaker, and then the zirconia beads were removed to obtain a cyan pigment dispersion liquid.

A black pigment dispersion liquid, a magenta pigment dispersion liquid, and a yellow pigment dispersion liquid were prepared in the same manner as in the method of preparing the cyan pigment dispersion liquid except that the pigment and the dispersion time were changed. Note that Pigment Black 7 (#52, manufactured by Mitsubishi Chemical Corporation) was used as a black pigment. As magenta pigment, Pigment Violet 19 (Fastogen Super Red BRZ, manufactured by DIC Corporation) was used. Pigment Yellow 185 (product of Basf SE, D1155) was used as a yellow pigment. The time for the dispersion treatment was 4 hours when the black pigment was used, and 6 hours when the magenta pigment and the yellow pigment were used.

### 1-3. Preparation of inkjet ink

The components were added in the proportions shown in Tables 1 and 2, and the mixture was stirred at 80°C to obtain an ink solution. The ink solution was filtered through a Teflon (registered trademark) 3-µm membrane filter available from ADVANTEC to obtain each inkjet ink.

**[Table 1]**

| Inkjet ink | | | no. 1 | no. 2 | no. 3 | no. 4 | no. 5 | no. 6 | no. 7 | no. 8 | no. 9 | no. 10 | no. 11 | no. 12 | no. 13 |
|---|---|---|---|---|---|---|---|---|---|---|---|---|---|---|---|
| Pigment dispersion liquid | | Cyan | | | | | | | | | | | | | |
| | | Black | 2.0% | 2.0% | 2.0% | 2.0% | 2.0% | 2.0% | 2.0% | 2.0% | 2.0% | 2.0% | 2.0% | 2.0% | 2.0% |
| | | Magenta | | | | | | | | | | | | | |
| | | Yellow | | | | | | | | | | | | | |
| (A) Polymerization initiator | Initiator (A-1) | Polymerization initiator 1 | | | | | | | | | 9.0% | | | | |
| | | Polymerization initiator 2 | | | | | | | | | | 9.0% | | | |
| | | Polymerization initiator 3 | 7.0% | 9.0% | 9.0% | 9.0% | 9.0% | 3.0% | 3.0% | 3.0% | | | | 9.0% | 9.0% |
| | | Polymerization initiator 4 | | | | | | | | | | | 9.0% | | |
| | Initiator (A-2) | Polymerization initiator 5 | | | | | | | | | | | | | |
| | | Polymerization initiator 6 | | | | | | | | | | | | | |
| | | Polymerization initiator 7 | | | | | | | | | | | | | |
| | | Polymerization initiator 8 | 1.0% | 1.0% | 1.0% | 1.0% | 1.0% | 1.0% | | 1.0% | 1.0% | 1.0% | 1.0% | 1.0% | 1.0% |
| (B) Polymerizable compound | Polymerizable compound (B-1) | Polyfunctional monomer 1 | 20.0% | 20.0% | 20.0% | 20.0% | 20.0% | 20.0% | 20.0% | 20.0% | 20.0% | 20.0% | 20.0% | 20.0% | 20.0% |
| | | Polyfunctional monomer 2 | 10.0% | 10.0% | 10.0% | | 10.0% | 10.0% | 10.0% | 10.0% | 10.0% | 10.0% | 10.0% | 10.0% | 10.0% |
| | | Polyfunctional monomer 3 | 20.0% | 20.0% | | 20.0% | 20.0% | 20.0% | 20.0% | 20.0% | 20.0% | 20.0% | 20.0% | 20.0% | 20.0% |
| | | Polyfunctional monomer 4 | 28.0% | 26.0% | 26.0% | 8.0% | 26.0% | 31.5% | 29.0% | 28.0% | 26.0% | 26.0% | 26.0% | 21.0% | 14.0% |
| | | Polyfunctional monomer 5 | | | 20.0% | | | | | | | | | | |
| | Polymerizable compound (B-2) | Monofunctional monomer 1 | 12.0% | 12.0% | 12.0% | 40.0% | 12.0% | 12.0% | 12.0% | 12.0% | 12.0% | 12.0% | 12.0% | 12.0% | 12.0% |
| | | Monofunctional monomer 2 | | | | | | | | | | | | 5.0% | |
| | | Monofunctional monomer 3 | | | | | | | | | | | | | 12.0% |
| (C) Gelling agent | | | | | | | | 0.5% | 4.0% | 4.0% | | | | | |
| Total | | | 100.0% | 100.0% | 100.0% | 100.0% | 100.0% | 100.0% | 100.0% | 100.0% | 100.0% | 100.0% | 100.0% | 100.0% | 100.0% |
| Mass ratio (B-1/A) | 9.8 | 7.6 | 7.6 | 4.8 | 7.6 | 20.4 | 26.3 | 19.5 | 7.6 | 7.6 | 7.6 | 7.1 | 6.4 | | |

**[Table 2]**

| Inkjet ink | | | no. 14 | no. 15 | no. 16 | no. 17 | no. 18 | no. 19 | no. 20 | no. 21 |
|---|---|---|---|---|---|---|---|---|---|---|
| Pigment dispersion liquid | | Cyan | | | 2.0% | | | | | |
| | | Black | | | | 2.0% | 2.0% | 2.0% | 2.0% | 2.0% |
| | | Magenta | | 4.0% | | | | | | |
| | | Yellow | 2.0% | | | | | | | |
| (A) Polymerization initiator | Initiator (A-1) | Polymerization initiator 1 | | | | | | | | |
| | | Polymerization initiator 2 | | | | | | | | |
| | | Polymerization initiator 3 | 9.0% | 9.0% | 9.0% | | | | | 9.0% |
| | | Polymerization initiator 4 | | | | | | | | |
| | Initiator (A-2) | Polymerization initiator 5 | | | | 9.0% | | | | |
| | | Polymerization initiator 6 | | | | | 9.0% | | 9.0% | |
| | | Polymerization initiator 7 | | | | | | 9.0% | | |
| | | Polymerization initiator 8 | 1.0% | 1.0% | 1.0% | 1.0% | 1.0% | 1.0% | 1.0% | 1.0% |
| (B) Polymerizable compound | Polymerizable compound (B-1) | Polyfunctional monomer 1 | 25.0% | 25.0% | 20.0% | 20.0% | 20.0% | 20.0% | 20.0% | |
| | | Polyfunctional monomer 2 | | 5.0% | | 20.0% | 20.0% | 20.0% | 20.0% | |
| | | Polyfunctional monomer 3 | 15.0% | 10.0% | 20.0% | 20.0% | 20.0% | 20.0% | 20.0% | |
| | | Polyfunctional monomer 4 | 31.0% | 29.0% | 36.0% | 16.0% | 16.0% | 16.0% | 16.0% | |
| | | Polyfunctional monomer 5 | | | | | | | | |
| | Polymerizable compound (B-2) | Monofunctional monomer 1 | 12.0% | 12.0% | 12.0% | 12.0% | 12.0% | 12.0% | 12.0% | 83.0% |
| | | Monofunctional monomer 2 | 5.0% | 5.0% | | | | | | 5.0% |
| | | Monofunctional monomer 3 | | | | | | | | |
| (C) Gelling agent | | | | | | | | | | |
| Total | | | 100.0% | 100.0% | 100.0% | 100.0% | 100.0% | 100.0% | 100.0% | 100.0% |
| Mass ratio (B-1/A) | | | 7.1 | 6.9 | 7.6 | 7.6 | 7.6 | 7.6 | 7.6 | 0.0 |

### 2. Image formation and evaluation

### 2-1. Image formation

An inkjet recording apparatus including KM1800i (number of nozzles: 1776) manufactured by Konica Minolta, Inc. was used as the recording apparatus. The ink tank was filled with inkjet ink (no. 1). Under an environment of 23°C and 55% RH, the inkjet ink was discharged onto a 2 cm × 2 cm section set on art paper for printing (Tokubishi Art, U.S. basis weight 104.7 g/m², Mitsubishi Paper Mills Limited) so that the ink application amount was 9 g/m². Next, a solid image was formed by irradiation with ultraviolet rays having a wavelength of 395 nm with an LED (KYOCERA Corporation), and an image of Example 1 was obtained. The ultraviolet irradiation conditions were as follows: irradiation range was 68 mm, irradiation length was 70 mm, and irradiance on the base material was 2.50 W/cm², and the light amount with which the image was irradiated was 1500 mJ/cm². The temperature of the base material surface during the discharge was adjusted to 30°C, and the printing speed was adjusted to 60 m/min. Images of the respective examples and comparative examples were obtained in the same manner except that the inkjet ink shown in Tables 3 and 4 was used and the light amount was changed as shown in Tables 3 and 4.

### 2-2. Folding crack resistance

Each image was mountain-folded using a paper folder (AFV-564FKT, Horizon Inc). Thereafter, the state of the image was observed, and the proportion of the area of a portion where exposure of the base material due to cracking did not occur (unexposed portion) was obtained by image analysis. The folding crack resistance was evaluated according to the following standard. Note that when the evaluation results are the same and the light amounts to be applied are different, a smaller light amount to be applied indicates a better result.

### (Standard)

5: no crack of the image was confirmed
4: cracks were confirmed in the image, and exposure of the white background was slight
3: cracks were confirmed in the image and exposure of the white background was present in less than half of the region
2: cracks were confirmed in the image and the white background was exposed in half or more of the region
1: cracks were confirmed in the image and the white background was exposed in the entire region

### 2-3. Resistance against peeling by cutting

For each image, the image forming section was cut using a bench cutter (PC-Horizon, P430 Co., Ltd). The cut part was rubbed with a finger to evaluate the degree of peeling of the coating film (image), thereby evaluating resistance against peeling by cutting according to the following standard. Note that when the evaluation results are the same and the light amounts to be applied are different, a smaller light amount to be applied indicates a better result.

### (Standard)

5: peeling did not occur in the coating film
4: peeling occurred but not visually recognizable
3: peeling occurred but was difficult to visually recognize
2: peeling occurred and was visually recognized
1: significant peeling occurred and was clearly visible

### 2-4. Gloss Uniformity

Under the same conditions as in "2-1. Image formation" except that an inkjet ink shown in Tables 3 and 4 was used and the light amount was changed as shown in Tables 3 and 4, density tone patch images having dot ratios of 20%, 50%, 70%, and 100% were formed in 2 cm × 2 cm areas, respectively . The glossiness and gloss difference between the formed image portion and the unprinted portion (white background portion) of the base material were visually observed. The gloss uniformity was evaluated according to the following standard. Note that when the evaluation results are the same and the light amounts to be applied are different, a smaller light amount to be applied indicates a better result.

### (Standard)

5: no gloss difference between the density tone patch image and the unprinted portion of the base material was observed in the images at all dot ratios
4: substantially no gloss difference between the density tone patch image and the unprinted portion of the base material was observed in the images at all dot ratios
3: although a slight gloss difference between the density gradation patch image and the unprinted portion of the base material was observed in the images at some dot ratios, the quality was within a practically acceptable range.
2: in images at half or more of dot rates, a difference in glossiness between the density tone patch image and the unprinted portion of the base material was recognized, and the image was visually unsatisfactory
1: in the images at all dot ratios, a difference in glossiness between the density tone patch image and the non-printed portion of the base material was recognized, and the image was visually unsatisfactory

### 2-5. Surface curability

Images of examples and comparative examples were obtained under the same conditions as in "2-1. Image formation" except that an inkjet ink shown in Tables 3 and 4 were used, the light amount was changed as shown in Tables 3 and 4, and the amount of ink applied was changed to 10 g/m². Each image was rubbed with a finger to evaluate the stickiness of the surface. In accordance with the method described in "K5701-1 6.2.3 Abrasion Resistance Test" of JIS Standard, art paper for printing (Tokubishi Art, basis weight: 104.7 g/m², Mitsubishi Paper Mills Limited) cut into a size to be a 2 cm² was placed on the solid image, and the solid image was rubbed with the art paper under a load of 800 g. Then, the degree of color transfer to the art paper for printing cut into a size to be a 2 cm² was visually observed. The surface curability was evaluated according to the following standard. Note that when the evaluation results are the same and the light amounts to be applied are different, a smaller light amount to be applied indicates a better result. In addition, when the evaluation result was 3 or more, it was an acceptable level.

### (Standard)

5: no surface stickiness was observed and no color transfer observed
4: no surface stickiness was observed but color transfer was observed, which was barely noticeable
3: slight surface stickiness was observed and slight color transfer was observed in certain parts
2: surface stickiness was observed and color transfer was visually observed
1: surface stickiness was observed and color transfer to the entire rubbed paper was clearly visually observed

### 2-6. Scratch Resistance

Images of the respective examples and comparative examples were obtained under the same conditions as in "2-1. image formation" except that the inkjet ink shown in Tables 3 and 4 were used and the light amount was changed as shown in Tables 3 and 4. Each formed image was rubbed with a nail from the upper side to the lower side three times, and the scratch resistance was evaluated according to the following standard based on the presence or absence of flaws on the image surface and the size of white spots. Note that when the evaluation results are the same and the light amounts to be applied are different, a smaller light amount to be applied indicates a better result. In addition, when the evaluation result was 3 or more, it was an acceptable level.

### (Standard)

5: no peeling was observed
4: peeling in a small size was observed in certain parts
3: image was peeled off, but most of the rubbed portion remained
2: image in a large size was observed in certain parts
1: almost all of the rubbed portion was peeled off

### 2-7. Evaluation Results

The results of the above-described evaluations are as illustrated in Tables 3 and 4.

**[Table 3]**

| [Example] / Comparative Example no. | | Example 1 | Example 2 | Example 3 | Example 4 | Example 5 | Example 6 | Example 7 | Example 8 | Example 9 | Example 10 | Example 11 | Example 12 | Example 13 |
|---|---|---|---|---|---|---|---|---|---|---|---|---|---|---|
| Inkjet ink | | no. 1 | no. 2 | no. 3 | no. 4 | no. 5 | no. 6 | no. 7 | no. 8 | no. 9 | no. 10 | no. 11 | no. 12 | no. 13 |
| Light amount | | 1500mJ | 400mJ | 400mJ | 400mJ | 300mJ | 300mJ | 300mJ | 250mJ | 400mJ | 400mJ | 400mJ | 400mJ | 400mJ |
| Evaluation result | Folding crack resistance | 5 | 5 | 5 | 5 | 5 | 5 | 5 | 5 | 5 | 5 | 5 | 5 | 5 |
| | Resistance against peeling by cutting | 5 | 5 | 5 | 5 | 5 | 5 | 5 | 5 | 5 | 5 | 5 | 5 | 5 |
| | Gloss uniformity | 5 | 5 | 5 | 4 | 3 | 5 | 5 | 5 | 5 | 5 | 5 | 5 | 5 |
| | Surface curability | 5 | 5 | 5 | 4 | 3 | 5 | 5 | 5 | 4 | 4 | 4 | 5 | 5 |
| | Scratch resistance | 5 | 5 | 5 | 5 | 3 | 5 | 4 | 5 | 4 | 4 | 4 | 5 | 5 |

**[Table 4]**

| [Example] / Comparative Example no. | | Example 14 | Example 15 | Example 16 | Comparative example 1 | Comparative example 2 | Comparative example 3 | Comparative example 4 | Comparative example 5 |
|---|---|---|---|---|---|---|---|---|---|
| Inkjet ink | | no. 14 | no.15 | no.16 | no.17 | no.18 | no.19 | no.20 | no.21 |
| Light amount | | 400mJ | 400mJ | 400mJ | 400mJ | 400mJ | 400mJ | 400mJ | 400mJ |
| Evaluation result | Folding crack resistance | 5 | 5 | 5 | 4 | 4 | 4 | 4 | 5 |
| | Resistance against peeling by cutting | 5 | 5 | 5 | 4 | 4 | 4 | 4 | 5 |
| | Gloss uniformity | 5 | 5 | 5 | 3 | 3 | 3 | 3 | 3 |
| | Surface curability | 5 | 5 | 5 | 2 | 2 | 2 | 2 | 2 |
| | Scratch resistance | 5 | 5 | 5 | 2 | 2 | 2 | 2 | 2 |

As illustrated in Tables 3 and 4, it is found that the inkjet ink containing the polymerization initiator (A-1) and the polymerizable compound (B-1) can form an image having both high surface curability and high abrasion resistance.

### Industrial Applicability

According to the present invention, it is possible to provide an actinic radiation-curable inkjet ink capable of forming an image having both high surface curability and high abrasion resistance. The present invention is considered to contribute to further spread of an inkjet recording method in the field of image formation.

Although embodiments of the present invention have been described and illustrated in detail, it is clearly understood that the same is by way of illustration and example only and not limitation, the scope of the present invention should be interpreted by terms of the appended claims.

## Claims

1. An actinic radiation-curable inkjet ink comprising: (A) a polymerization initiator, and (B) a polymerizable compound, wherein
the (A) polymerization initiator includes (A-1) a polymerization initiator represented by General formula (1) below: 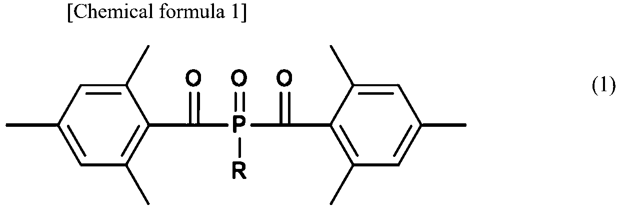
in General formula (1), R represents an aliphatic hydrocarbon group, and
the (B) polymerizable compound includes (B-1) a polymerizable compound having two or more polymerizable functional groups.

2. The actinic radiation-curable inkjet ink according to claim 1, wherein
R is a normal octyl group.

3. The actinic radiation-curable inkjet ink according to claim 1, wherein
in the actinic radiation-curable inkjet ink, when a content mass of the (B-1) polymerizable compound having two or more polymerizable functional groups is a numerator and a content mass of the (A) polymerization initiator is a denominator, a mass ratio ((B-1)/(A)) is greater than 0.0 and equal to or less than 40.0.

4. The actinic radiation-curable inkjet ink according to claim 3, wherein the mass ratio ((B-1)/(A)) is 5.0 to 30.0.

5. The actinic radiation-curable inkjet ink according to claim 1, wherein the (B-1) polymerizable compound having two or more polymerizable functional groups includes an alkylene oxide-modified polymerizable compound.

6. The actinic radiation-curable inkjet ink according to claim 1, further comprising (C) a gelling agent.

7. An image forming method, comprising:
applying the actinic radiation-curable inkjet ink according to any one of claims 1 to 6 to a base material or an intermediate transfer member; and
irradiating the actinic radiation-curable inkjet ink with actinic radiation.
